**Europäisches Patentamt**

**European Patent Office**

**Office européen des brevets**

(19)

(11) Publication number: **0 084 462**
**B1**

(12) # EUROPEAN PATENT SPECIFICATION

(45) Date of publication of patent specification: **18.03.87**

(51) Int. Cl.⁴: **H 04 J 1/06, H 04 J 1/10**

(21) Application number: **83300266.0**

(22) Date of filing: **19.01.83**

(54) **A method of generating carrier frequency, pilot frequency and local signals for a multichannel carrier frequency system and a carrier frequency network.**

(30) Priority: **20.01.82 HU 14682**

(43) Date of publication of application:
**27.07.83 Bulletin 83/30**

(45) Publication of the grant of the patent:
**18.03.87 Bulletin 87/12**

(84) Designated Contracting States:
**FR GB SE**

(56) References cited:
**US-A-2 939 917**
**US-A-3 450 841**

**CABLES AND TRANSMISSION, vol. 26, no. 2, April 1972, pages 119-131, Paris, FR., C. CHALHOUB et al. "Système A 300 voies sur paires symètriques"**

(73) Proprietor: **TELEFONGYAR**
**P.O. Box 16**
**H-1956 Budapest (HU)**

(72) Inventor: **Boglár, Gyula**
**Frankel Leó utca, 106**
**H-1023, Budapest (HU)**
Inventor: **Szalai, Tibor**
**Lövölde tér 2**
**H-1071, Budapest (HU)**

(74) Representative: **Gold, Tibor Zoltán et al**
**T.Z.GOLD & COMPANY 9, Staple Inn**
**London WC1V 7QH (GB)**

# Description

The invention relates to a method of generating carrier frequency, pilot frequency and local signals for a multichannel carrier frequency system, wherein a basic frequency is chosen for handling traffic in respective bottom and superior frequency bands in two directions, in channels defined with normalised frequency intervals. In this specification and its claims the term 'normalised frequency intervals' shall mean equispaced frequency intervals having a minimum frequency separation consistent with the requirement to transmit side bands of sufficient width to enable the accurate reception and reproduction of transmitted information.

The invention relates also to a carrier frequency network for performing the proposed method, comprising respective signal transmitting paths for handling traffic in respective lower and upper frequency bands in two directions in Q, for example Q=300 channels, at least two terminal repeaters, a line repeater for providing frogging of channels, wherein each terminal repeater comprises a signal source for generating 2Q carrier frequency signals for the channels, and each line repeater comprises a signal source for generating a band crossing signal necessary for "frogging" the channels.

The method according to the invention and the carrier frequency network for carrying out the proposed method are particularly suitable for using in a coil-loaded cable network, which have been used for a long time and will continue to be exploited for a long time, probably for decades yet, and wherein a practically faultless data transmission is to be achieved in a higher number of channels.

In many countries of the world symmetrical cable networks have been provided, the service life of which is expected to continue for 30 to 50 years. In earlier times, these networks were used for assuring acoustic frequency connections on coil-loaded lines; however, lately these networks have found use also in data transmission systems formed in 12, 24 or 60, or sometimes 120 channels.

Experience shows that data and news transmission can be provided in a high number of 60 channel systems if crosstalk can be avoided on the transmission lines. In a wide range of the frequency values, for example from 12 to 552 kHz, the level of crosstalk attenuation can be equalised only by solving many problems and to achieve this aim special equipment is required.

A further problem lies in the low level of time stability of any equalisation achieved. These disadvantages have given impulses to seeking the solution to the problem of crosstalk in other ways, by avoiding the need for equalisation. To this end, a method known as band crossing has been developed, wherein the actually used channel is transformed into two frequency value ranges according to the transmission directions and in this way different frequency ranges are chosen for the two different directions of traffic provided in a higher number of channels; thus understandable crosstalk can be avoided. This solution has been used in carrier frequency channels of 120+120, 240+240 and 480+480 channels.

When utilising a high number of channels, the transmission conditions depend mainly on the fact that the amplitude characteristics of the cable are a function which depends on frequency; therefore, although the same cable is the medium of transmission, the method of band crossing assures different conditions relating to the different transmission directions. The conditions for transmission in two directions can be harmonized if the frequency ranges of the two bands are changed alternately, by line repeaters working in the path of the signal, data, news transmission. The line repeaters are really amplifiers which can work without supervision.

The change of the frequency bands as described above and effected by the line repeaters has been called frogging, in the technical literature. The line repeater is equipped with a special modulating system for realising the frogging of bands. For controlling the modulating system the line repeater contains a piezoelectric oscillator. A piezoelectric oscillator can only assure frequency values with a low level of accuracy and stability in the working conditions of the networks because the piezoelectric crystal of the oscillator cannot be placed in thermostatic conditions in the networks in view of the technical difficulties of the power supply for thermostats. In these networks the frequency errors of the piezoelectric oscillators appear as a summed error of the repeaters placed along the transmission line. It follows that according to the known solution of the art the described carrier frequency systems show an error which is proportional to the length of the transmission line and therefore the reliability of transmission is reduced. This error delimits the acceptable length of the transmission lines and leads to a lowering of the reliability level.

A 300 channel system (the SPS 300) using symmetrical cable pairs has been described in 'Cables and Transmission' Volume 26, April 1972, No. 2 at pages 119 to 131 inclusive. In that suppressed carrier system the 300 channels are allocated frequency bands which do not interfere with the existing 12+12 channels carried by the cables so that both can be carried simultaneously on separate lines. The transmission process is of the n+n type where signals in one direction are carried in one frequency band and signals in the opposite direction are carried in another lower (or higher) frequency band and there is an exchange of the signals in the two frequency bands (frogging) in the middle of the main amplification section. Three pilot signals are transmitted in each direction together with a band crossing signal. The frequencies of four of the pilot signals are chosen as non-multiples of 4 kHz to avoid interference with residual signals from the suppressed carrier waves. However the basic pilot frequency used to compare frequencies between principal stations is 308 kHz, the band crossing signal frequency is 3596 kHz and the upper pilot frequency is 3288 kHz, all multiples of 4 kHz and hence susceptible to interference. Moreover the pilot frequencies are clearly generated by independent oscillators so that the system is also subject to frequency errors along the line.

In some of the known carrier frequency systems, if the mentioned multichannel transmission chain is to be realised, the working of the existing e.g. 60-channel cable, systems should be switched off and therefore—in whatever form the described system has been realized and provided—the work done by the cable can be improved only to a limited degree. In known embodiments of this solution, system modems (modulator-demodulator units) are necessary for optimal meeting of the described requirements; however, modems are expensive and are characterised by a sophisticated construction.

The invention is based on the discovery that the disadvantageous features of known solutions follow unavoidably from the routine accepted in the international recommendations relating to carrier frequency techniques for multichannel transmission and especially from the fact that according to the international recommendations signal sources are used for generating carrier frequency signals necessary for the frequency bands used in transmission of speech signals which sources, for example synthesisers, unavoidably use multiples of 4 kHz for generating the virtual carrier frequencies of the line, pilot frequencies by the use of independent oscillators and local signals for band crossing by means of line repeaters working without supervision. Due to the application of free running oscillators, the frequency error can be very high and the spectrum of the carrier frequencies comprising multiples of 4 kHz causes in the known solutions understandable crosstalk in the known solutions of frequency assigning.

It is an aim of the invention to provide a method, and on the basis of the method a carrier frequency network or frequency transmission system, in which multichannel traffic, additional to the earlier 12- or 60-channel traffic systems, can be provided and wherein even after a higher number of frequency frogging operations the error of the carrier frequency is practically zero. A further aim lies in that transmission is to be realised not only in the acoustic channels but also a pilot frequency signal should be transmitted for comparing frequency values. The value of this pilot frequency is 300 kHz according to international practice. It is also desired to provide transmission of the pilot signals for the control and regulation of the system and of the signals which are necessary in localising line errors.

For achieving the above aim, a method of generating carrier frequency, pilot frequency and local signals for a multichannel carrier frequency system are herein proposed wherein a basic frequency is chosen for the handling of traffic in a bottom frequency band and in a superior frequency band in two directions in channels defined with normalised frequency intervals as defined above and wherein, according to the invention, as the basis of frequency assignment to a series of signals, the frequency of a basic frequency $f_1$ is chosen for the frequency of a lower bottom pilot signal and the basic frequency $f_1$ (in kilohertz) is equal to an odd whole number chosen adjacent to the lower limit of the bottom frequency band; the frequency of an upper bottom pilot signal lying adjacent to the lower limit of the superior frequency band is an odd multiple of the basic frequency $f_1$; the frequency values of respective lower and an upper superior pilot signals are chosen adjacent to the upper limits of the bottom and the superior frequency bands respectively and have values equal to respective whole multiples of the basic frequency. In this way the desired aim is attained because the difference between the frequency values assigned to the two transmission directions in the bottom and in the superior frequency bands is an odd multiple of the basic frequency $f_1$ (the frequency of the lower bottom pilot signal), which is an odd whole number of kilohertz and therefore no band is realised which is an integral multiple of 4 kHz, this leads to non-understandable crosstalk.

Frogging can be provided very advantageously in this system, if a local band crossing frequency is generated with frequency higher than the frequency of the upper superior pilot signal and which frequency is a whole odd multiple of the basic frequency.

The pilot signals have advantageously the frequency values $f_1$, $2nf_1$, $(2n+1)f_1$ and $4nf_1$ the band crossing signal the frequency value $(4n+1)f_1$, wherein $n$ is a natural number and $f_1$ is the basic frequency.

For a 300-channel data transmission system, it is advantageous to choose the basic frequency to be between 248 and 300 kHz as a whole number lying at the geometrical mean of this value domain.

Using the above-specified method a carrier frequency transmission network is proposed, wherein a low crosstalk level can be given and which comprises a signal path of a signal transmission in a bottom frequency band, another signal path for signal transmission in a superior frequency band in Q channels, at least two end repeaters and a line repeater for frogging, and each end repeater comprises a signal source for generating 2Q carrier frequency signals, a signal of basic frequency and three pilot signals with respective frequencies $2nf_1$, $(2n+1)f_1$ and $4nf_1$; further, each line repeater comprises a signal source for generating band crossing signals of a frequency $(4n+1)f_1$ wherein $n$ is a natural number and $f_1$ is the basic frequency. Advantageously, the signal source of the line repeater is such that generating signals with

frequency values $mf_1$ should also be possible, $m$ being a natural odd number.

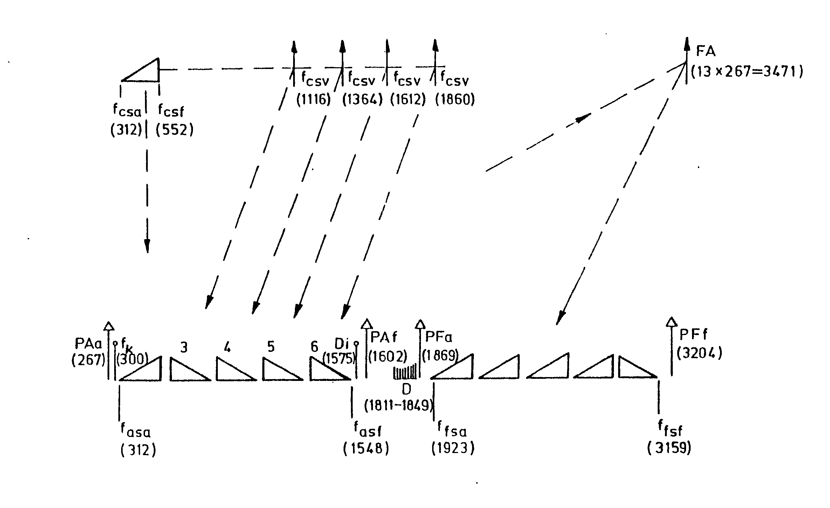

The invention will be described in detail with reference to a preferred embodiment illustrated, merely by way of example, in the accompanying drawing. The only Figure of the drawing shows schematically the frequency assignment in a 300-channel transmission system.

The following example relates to a 300-channel transmission system; however, it is obvious that the described embodiment need not be limited to such a system. If necessary, the frequency interval between the bottom and superior frequency bands assigned to the transmission direction may e.g. be greater than in the example and the bands can be used for realising other telecommunication systems. Independently of the system a main feature of the invention can be realised, i.e. the value of the basic frequency for frequency assignment is a whole odd number, the frequency of the upper bottom pilot signal is an odd whole multiple of the basic frequency and the frequency of the superior pilot signals is a whole multiple of the basic frequency $f_1$ and the frequency value of the local band crossing signal is an odd whole multiple of the basic frequency $f_1$ which is higher than the highest frequency of the pilot signals.

The only Figure includes symbols respectively representing the following:

PAa— the lower bottom pilot signal,
PAf — the lower superior.pilot signal,
PFa — the upper bottom pilot signal,
PFf — the upper superior pilot signal,
FA  — the local band crossing signal,
D    — the control signal generated for localising network errors,
Di   — the signal for starting a supervising oscillator,
$f_{csa}$  — the bottom frequency value of the 60-channel transmission group,
$f_{csf}$  — the superior frequency value of the 60-channel transmission group,
$f_{csv}$  — the frequency value of the carrier signal assigned to the 60-channel group,
$f_{asa}$  — the bottom frequency limit of the bottom frequency band,
$f_{asf}$  — the superior frequency limit of the bottom frequency band,
$f_{fsa}$  — the bottom frequency limit of the superior frequency band,
$f_{fsf}$  — the superior frequency limit of the superior frequency band, and
$f_k$   — the frequency value of the pilot signal generated for frequency comparison.

The Figure includes below each reference symbol (letter), respective numbers in brackets indicating the frequency values (in kHz) assigned in a real 300-channel transmission system to the respective signals.

In a transmission direction a lower frequency domain is chosen wherein a lower bottom signal PAa and a lower superior pilot signal PAf are used. In the opposing transmission direction a higher frequency domain is chosen which uses upper superior and upper bottom pilot signals PFf and PFa. Band crossing can be achieved in such a way that the channels are alternately changed between one another by using the local signal FA, i.e. the channels having been realised in the bottom frequency band are realised in the superior frequency band and *vice versa*.

For frequency assigning, a basic frequency $f_1$ is chosen on the basis of which the frequency value of the lower bottom pilot signal PAa is assigned. According to the invention a whole multiple of the basic frequency $f_1$, e.g. $2nf_1$ is assigned to the lower superior pilot signal PAf, wherein $n$ is a natural number. Another, odd multiple of the basic frequency $f_1$, e.g. $(2n+1)f_1$ is assigned to the upper bottom pilot signal PFa, and another multiple, e.g. $4nf_1$ to the upper superior pilot signal PFf.

It is obvious that the frequency value $(4n+1)f_1$ can be assigned to the local band crossing signal in the conditions of a usual transmission system. If $n=3$, in the described relations the difference between the frequency values of the superior and the bottom frequency bands is $11f_1$ when realising two opposite transmission directions in opposite frequency assigning systems. If the frequency value of the pilot signal PAa is equal to the basic frequency $f_1$, i.e. to an odd whole number, the 11-fold value of the basic frequency should have an odd value, too, it cannot be a whole multiple of the 4 kHz value, and therefore no understandable crosstalk can take place. Further, in spite of the opposite frequency assignments to the bands no understandable crosstalk can take place in the case of traffic handled in two directions at same time.

When the frequency value of the lower bottom pilot signal PAa is assigned, to the basic frequency $f_1$ the following considerations are to be taken into account:

The highest frequency values which usually appear in different embodiments of a 300-channel carrier frequency system carried out in a single cable lie in the range from 248 to 252 kHz. The 300-channel system should transmit a pilot signal of frequency $f_k$, necessary for frequency comparison, wherein $f_k$=300 kHz. Taking into account the filter units of a real system, it is best to choose the basic frequency adjacent to the geometrical mean value of the mentioned values, i.e. in a value domain from 272.76 to 274.95 kHz. In the vicinity of the given limits the following odd whole numbers can be found: 263, 265, 267, 269, 271, 273, 275, 277, 279 and 281 kHz. It is obvious that of these, the lowest value should be chosen at which transmission of the 300 channels, the necessary pilot signals and the required supervising signal can all be realised. Such a lowest value is e.g. 267 kHz, the use of which assures the possibility of selecting 3471 kHz for the local signal FA of the band crossing modulator (the frogging modulator), and 267, 1602, 1869 and 3204 kHz for the pilot signals PAa, PAf, PFa and PFf, respectively. These frequency values are harmonics of one another, and therefore they may easily be generated in a single signal source on the basis of a source signal. The local band crossing signal FA can be generated without difficulties from any of the pilot signals PAa, PAf, PFa and PFf in the line repeater. The Figure includes, additionally to the above mentioned pilot signals, a pilot signal with frequency $f_k=300$ kHz for frequency comparison and supervising signals D for localising errors. In line repeaters working without supervision free-running oscillators are used for different frequency values from 1811 to 1849 kHz which are generated in intervals of 1 kHz by different units. The mentioned oscillators do not function continuously and they can be started by means of signals Di generated in the bottom frequency band and to which a frequency of e.g. 1575 kHz is assigned. The signal of the oscillator, after starting, is passed to the starting amplifier of the superior frequency band, wherein the level of this signal can be measured and in this way the working stage of the line can be proved. By means of this signal the inoperative repeaters can be localised.

In the case of the above-mentioned frequency assignment scheme a man skilled in the art can define without difficulties the frequency values of the channel carrier signals according to the normalised channel intervals $\triangle f$, and the frequency values of the group carrier signals. The Figure includes frequency values 1116, 1364, 1612 and 1860 kHz assigned to the carrier signals of frequency $f_{csv}$ in the 60-channel groups designated by 3, 4, 5 and 6. In the transmission direction of lower frequencies the 60-channel group of lower frequency can occupy the band from 312 to 552 kHz, in the transmission direction of lower frequency the talk channels occupy the band from 312 to 1548 kHz, and for band crossing, it is advantageous to choose the range from 1923 to 3159 kHz. It is obvious that another frequency assignment scheme is also acceptable, for example, with a frequency value other than $(4n+1)f_1$ for the local band crossing signal FA. The basic frequency $f_1$ should be chosen as an odd whole number; however, the local band crossing signals FA may have different frequency values defined as $mf_1$, wherein $m$ means a natural odd number and $f_1$ the basic frequency. It is obvious that for the mentioned values of the number $m$ the band crossing signal cannot have the value $2nf_1$ or $4nf_1$.

On the basis of the above-described directives, a man skilled in the art can without difficulty provide for handling traffic by means of the specified methods a carrier frequency network which comprises Q channels working in two directions (for example, Q=300), at least two end repeaters, a line repeater wherein the repeaters include respective signal sources and the line repeater is adapted for frogging, i.e. for alternate changing the frequency bands of transmission. The signal source of an end repeater is effective to generate 2Q carrier signals for the channels, a lower bottom pilot signal, an upper bottom pilot signal, a lower superior pilot signal and an upper superior pilot signal, and, if required, further signals. The line repeaters comprise an amplifier working without supervision and have signal sources for generating the local band crossing signals.

The transmission network is realised in the following way: the basic frequency of the signal source of the end repeater has a value equal to a whole odd number defined in the value domain of the lower limit of the bottom frequency band, the source has outputs for giving out signals of basic frequency $f_1$, and of frequency values $2nf_1$, $(2n+1)f_1$ and $4nf_1$, wherein $n$ is a natural number and $f_1$ the basic frequency. The signal source of the line repeater has circuits which are able to transmit through an output signal of $(4n+1)f_1$ frequency. It is advantageous to realise the line repeater with a signal source for generating further local band crossing signals with values $mf_1$, wherein $m$ is an odd natural number. For different outputs the natural number $m$ can mean different values, respectively.

The method according to the invention and the carrier frequency network realised on the basis of the method ensures information transmission with a high level of reliability, with a low level of cross-talk or with non-understandable crosstalk, and can be adapted to symmetrical cable networks with coil loaded circuits, the life period of which is to be expected for some decades.

The scope of protection defined by the claims is not, of course, restricted to the preferred embodiment described and illustrated above purely by way of example. The invention is applicable in and to any telecommunication system using cables wherein the level of crosstalk should be limited effectively.

**Claims**

1. A method of generating carrier frequency, pilot frequency and local signals for a multi-channel carrier frequency transmission system, comprising the steps of generating a basic frequency signal for traffic to be realised in two directions in a bottom frequency band and in a superior frequency band divided into channels defined with normalised frequency intervals among them, generating on the basis of a basic frequency $f_1$ a lower pilot frequency signal for the superior frequency band lying adjacent to the lower limit of the superior frequency band, respective upper pilot frequency signals for the bottom and superior frequency bands adjacent to the upper limit of the bottom and the superior frequency bands respectively, and carrier frequency signals with respective frequency values assigned to the normalised frequency intervals, characterised in that the basic frequency is identified with the frequency of a lower pilot frequency signal which lies adjacent to the bottom limit of the bottom frequency band, for the bottom frequency band, and has a value (in kilohertz) of an odd whole number and in that to the pilot frequency signals are assigned whole multiples of the basic frequency.

2. A method as defined in claim 1, characterised in that a local band crossing frequency signal is generated, the value of which is higher than the value of the upper pilot frequency signal of the superior frequency band is equal to an odd multiple of the basic frequency.

3. A method as claimed in claim 1 or 2, characterised in that there are assigned to the lower pilot frequency signal of the superior frequency band the value $(2n+1)f_1$ the upper pilot frequency signal of the bottom frequency band the value $2nf_1$, and to the upper pilot frequency signal of the superior frequency band the value $4nf_1$, wherein $n$ is a natural number and $f_1$ the basic frequency.

4. A method as claimed in any of claims 1 to 3, characterised in that the value $(4n+1)f_1$ is assigned to the local band crossing frequency signal wherein $n$ is a natural number and $f_1$ the basic frequency.

5. A method as claimed in any of claims 1 to 4, characterised in that the carrier frequency signals are generated for a 300-channel signal transmission system in groups of 60 channels, and the basic frequency of an odd whole number of kilohertz is chosen from the frequency interval 248 to 300 kHz and adjacent to the geometrical mean of the said frequency interval.

6. A carrier frequency network, comprising respective signal paths, for traffic to be realised in a bottom and in a superior frequency band in Q, for example in Q=300 channels, at least two end repeaters each with a signal source, and at least one line repeater for frogging the bands, characterised in that the signal source of the end repeater includes circuits for generating 2Q carrier frequency signals for the channels, a basic frequency signal and pilot frequency signals with respective frequency values $2nf_1$, $(2n+1)f_1$ and $4nf_1$; the signal source of the line repeater includes circuits for generating band crossing frequency signals with respective frequency values $(4n+1)f_1$ and, if required, $mf_1$, wherein $n$ means a natural number, $m$ means odd natural numbers necessarily of different values and $f_1$ the basic frequency the value of which in kilohertz is a whole odd number chosen adjacent to the bottom limit of the bottom frequency band.

7. A multi-channel carrier frequency transmission system in which transmission is effected in respective first and second frequency bands each comprising a number of transmission channels, the system including means for generating respective upper and lower pilot frequency signals adjacent the upper and lower frequency limits of each of the first and second frequency bands, characterised in that the lower pilot (frequency) signal (PAa, PFa) of each band is an odd multiple of a basic frequency $(f_1)$ and the upper pilot frequency signal (PAf, PFf) of each band is a multiple of the basic frequency $(f_1)$, and

the value of the basic frequency $(f_1)$ in kilohertz is an odd whole number.

8. A frequency transmission system as claimed in Claim 7, characterised in that the lower pilot frequency signal (PAa) of the first frequency band is equal to the basic frequency $(f_1)$ and the upper pilot frequency signal of the first frequency band, and the lower and upper pilot frequency signals of the second frequency band are assigned values of $2nf_1$, $(2n+1)f_1$, and $4nf_1$, where $f_1$ is the value in kilohertz of the basic frequency and $n$ is a whole number.

**Patentansprüche**

1. Verfahren zum Erzeugen von Trägerfrequenzsignalen, Steuerfrequenzsignalen und lokalen Signalen für ein Mehrkanal-Trägerfrequenz-Übertragungssystem, mit den Verfahrensschritten des Erzeugens eines Grundfrequenzsignals für einen Nachrichtenverkehr in zwei Richtungen in einem unteren Frequenzband und einem oberen Frequenzband, die in Kanäle geteilt sind, die durch normalisierte Frequenzintervalle zwischen ihnen definiert sind, eines unteren Steuerfrequenzsignals auf Basis einer Grundfrequenz $f_1$ für das obere Frequenzband nahe an der unteren Grenze des oberen Frequenzbandes, entsprechender oberer Steuerfrequenzsignale für das untere und das obere Frequenzband nahe an der oberen Grenze des unteren bzw. oberen Frequenzbandes, und von Trägerfrequenzsignalen mit entsprechenden Frequenzwerten, die den normalisierten Frequenzintervallen zugeordnet sind, dadurch gekennzeichnet, daß die Grundfrequenz für das untere Frequenzband mit der Frequenz eines unteren Steuerfrequenzsignals gleichgesetzt wird, welches bei der unteren Grenze des unteren Frequenzbandes liegt und den Wert (in Kilohertz) einer ungeraden ganzen Zahl hat, und daß dem Steuerfrequenzsignalen ganze Vielfache der Grundfrequenz zugeordnet werden.

2. Verfahren nach Anspruch 1, dadurch gekennzeichnet, daß ein lokales Bandkreuzungsfrequenzsignal erzeugt wird, dessen Wert höher ist als der Wert des oberen Steuerfrequenzsignals des oberen Frequenzbandes gleich einem ungeraden ganzen Vielfachen der Grundfrequenz.

3. Verfahren nach Anspruch 1 oder 2, dadurch gekennzeichnet, daß dem unteren Steuerfrequenzsignal des oberen Frequenzbandes der Wert $(2n+1)f_1$, dem oberen Steuerfrequenzsignal des unteren Frequenzbandes der Wert $2nf_1$ und dem oberen Steuerfrequenzsignal des oberen Frequenzbandes der Wert $4nf_1$ zugeordnet werden, worin n eine natürliche Zahl und $f_1$ die Grundfrequenz sind.

4. Verfahren nach einem der Ansprüche 1 bis 3, dadurch gekennzeichnet, daß der Wert $(4n+1)f_1$ dem lokalen Bandkreuzungsfrequenzsignal zugeordnet wird, worin n eine natürliche Zahl und $f_1$ die Grundfrequenz sind.

5. Verfahren nach einem der Ansprüche 1 bis 4, dadurch gekennzeichnet, daß die Trägerfrequenzsignale für ein 300 - Kanal - Signalübertragungssystem in Gruppen von 60 Kanälen erzeugt werden und die Grundfrequenz als ungerade ganze Zahl in kilohertz aus dem Frequenzinterval von 248—300 kHz bei dem geometrischen Mittelwert des Frequenzintervalls gewählt wird.

6. Trägerfrequenznetz mit entsprechenden Signalwegen für den Nachrichtenverkehr in einem unteren und einem oberen Frequenzband in Q, z.B. Q=300 Kanälen, wenigstens zwei Endverstärkern mit jeweils einer Signalquelle und wenigstens einem Netzverstärker zum Kreuzen der Bänder, dadurch gekennzeichnet, daß die Signalquelle der Endverstärker Schaltungen zum Erzeugen von 2 Q Trägerfrequenzsignalen für die Kanäle, eines Grundfrequenzsignals und von Steuerfrequenzsignalen mit entsprechenden Frequenzwerten von $2nf_1$, $(2n+1)f_1$ und $4nf_1$ aufweist und die Signalquelle des Netzverstärkers Schaltungen zum Erzeugen von Bandkreuzungsfrequenzsignalen mit entsprechenden Frequenzwerten von $(4n+1)f_1$ und, falls erforderlich, $mf_1$ enthält, wobei n eine natürliche Zahl, m ungerade natürliche Zahlen notwendigerweise· unterschiedlicher Werte und $f_1$ die Grundfrequenz bedeuten, deren wert in Kilohertz eine ganze, ungerade Zahl bei der unteren Grenze des unteren Frequenzbandes ist.

7. Mehrkanal-Trägerfrequenzübertragungssystem, bei welchem die Übertragung in entsprechenden ersten und zweiten Frequenzbändern durchgeführt wird, die jeweils eine Anzahl von Übertragungskanälen aufweisen, mit einer Einrichtung zum Erzeugen entsprechender oberer und unterer Steuerfrequenzsignale bei den oberen und unteren Frequenzgrenzen jedes der ersten und zweiten Frequenzbänder, dadurch gekennzeichnet, daß das untere Steuer(frequenz)signal (PAa, PFa) jedes Bandes ein ungerades Vielfaches einer Grundfrequenz ($f_1$), das obere Steuerfrequenzsignal (PAf, PFf) jedes Bandes ein Vielfaches der Grundfrequenz ($f_1$) und der Wert der Grundfrequenz ($f_1$) in Kilohertz eine ungerade ganze Zahl sind.

8. Frequenzübertragungssystem nach Anspruch 7, dadurch gekennzeichnet, daß das untere Steuerfrequenzsignal (PAa) des ersten Frequenzbandes gleich der Grundfrequenz ($f_1$) ist und dem oberen Steuerfrequenzsignal des ersten Frequenzbandes und dem unteren und dem oberen Steuerfrequenzsignal des zweiten Frequenzbandes die Werte $2nf_1$ $(2n+1)f_1$ und $4nf_1$ zugeordnet sind, worin $f_1$ der Wert der Grundfrequenz in Kilohertz und n eine ganze Zahl sind.

## Revendications

1. Procédé pour générer une fréquence porteuse, une fréquence pilote et des signaux locaux pour un système de transmission multicanaux à fréquences porteuses, incluant les étapes consistant à produire un signal à fréquence de base pour un trafic devant être réalisé dans deux directions dans une bande de fréquences basse et dans une bande de fréquences haute, subdivisées en canaux définis avec des intervalles de fréquences normalisés entre eux, à produire, sur la base d'une fréquence de base $f_1$, un signal à fréquence pilote inférieure pour la bande de fréquences haute, cette fréquence pilote étant adjacente à la limite inférieure de la bande de fréquences haute, des signaux respectifs à fréquences pilotes supérieures pour les bandes de fréquences basse et haute, ces fréquences pilotes étant adjacentes respectivement à la limite supérieure de la bande de fréquences basse et de la bande de fréquences haute, et des signaux à fréquence porteuse, conformes aux intervalles normalisés de fréquences, caractérisé en ce que la fréquence de base est rendue identique à la fréquence d'un signal à fréquence pilote inférieure pour la bande de fréquences basse qui est voisine de la limite inférieure de la bande de fréquences basse, et possède une valeur (en kilohertz) égale à un nombre entier impair, en ce qu'aux signaux à fréquences pilotes sont affectés des multiples entiers de la fréquence de base, et en ce que les signaux à fréquences porteuses possèdent des valeurs respectives de fréquence affectées aux intervalles normalisés de fréquences.

2. Procédé tel que défini dans la revendication 1, caractérisé en ce qu'un signal de fréquence locale de croisement de bandes est produit, dont la valeur est supérieure à la valeur du signal à fréquence pilote supérieure de la bande de fréquences haute et est égale à un multiple impair de la fréquence de base.

3. Procédé tel que revendiqué dans la revendication 1 ou 2, caractérisé en ce que la valeur $2nf_1$ est affectée au signal à fréquence pilote inférieure de la bande de fréquences haute, la valeur $(2a+1)f_1$ est affectée au signal à fréquence pilote supérieure de la bande de fréquences basse et la valeur $4nf_1$ est affectée au signal à fréquence pilote supérieure de la bande de fréquences haute $n$ étant un nombre entier naturel et $f_1$ la fréquence de base.

4. Procédé tel que revendiqué selon l'une quelconque des revendications 1 à 3, caractérisé en ce que la valeur $(4n+1)f_1$ est affectée au signal à fréquence locale de croisement de bandes, $n$ désignant un nombre entier naturel et $f_1$ la fréquence de base.

5. Procédé tel que revendiqué selon l'une quelconque des revendications 1 à 4, caractérisé en ce que les signaux à fréquences porteuses sont produits pour un système de transmission de signaux à 300 canaux, en groupes de 60 canaux et en ce qu'on choisit comme fréquence de base un nombre entier impair de kilohertz dans l'intervalle allant de 240 à 300 kHz, adjacente au centre géométrique de l'intervalle de fréquence mentionné.

6. Réseau à fréquences porteuses, comportant: des voies respectives de transmission des signaux, pour un trafic devant être réalisé dans une bande de fréquences basse et dans une bande de fréquences haute sur Q canaux, par exemple sur Q=300 canaux, au moins deux répéteurs terminaux comportant chacun une source de signaux et au moins un répéteur de ligne pour produire des sauts de bandes, caractérisé en ce que la source de signaux du répéteur terminal comporte des circuits servant à générer 2Q signaux à fréquences porteuses pour les canaux, un signal à fréquence de base et des signaux à fréquences pilotes possèdant les fréquences respectives $2nf_1$, $(2n+1)f_1$, et $4\,nf_1$, en ce que la source de signaux du répéteur de ligne comporte des circuits servant à générer des signaux à fréquences de croisement de bandes possèdant les fréquences respectives $(4n+1)f_1$ et, si cela est requis, $mf_1$, $n$ désignant un nombre entier naturel, $m$ désignant des nombres entiers naturels impairs ayant nécessairement des valeurs différentes et $f_1$ étant la fréquence de base dont la valeur en kilohertz est un nombre entier impair choisi au voisinage de la limite inférieure de la bande de fréquences basse.

7. Système de transmission muticanal à fréquences porteuses, dans lequel la transmission est réalisée dans des première et seconde bandes de fréquences respectives comportant chacune une pluralité de canaux de transmission, le système incluant des moyens pour produire des signaux respectifs à fréquences pilotes supérieure et inférieure adjacentes aux limites supérieure et inférieure de fréquences de chacune des première et seconde bandes de fréquences, caractérisé en ce que le signal à fréquence pilote inférieure (PAa, PFa) de chaque bande est un multiple impair d'une fréquence de base $(f_1)$, en ce que le signal à fréquence pilote supérieure (PAf, PFf) de chaque bande est un multiple de la fréquence de base $(f_1)$ et que la valeur de la fréquence de base $(f_1)$, eten ce que la valeur de la fréquence de base $(f_1)$ en kilohertz est un nombre entier impair.

8. Système de transmission de fréquences tel que revendiqué dans la revendication 7, caractérisé en ce que le signal à fréquence pilote inférieure (PAa) de la première bande de fréquences est égale à la fréquence de base $(f_1)$ et en ce qu'au signal à fréquence pilote supérieure de la première bande de fréquence et aux signaux à fréquences pilotes inférieure et supérieure de la seconde bande de fréquences sont affectées des valeurs égales à $2nf_1$, $(2n+1)f_1$, et $4nf_1$, $f_1$ étant la valeur en kilohertz de la fréquence de base et $n$ étant un nombre entier.

1